# EUROPEAN PATENT SPECIFICATION

(11) **EP 2 250 791 B1**
(45) Date of publication and mention of the grant of the patent: **10.08.2016**
(21) Application number: 08701426.2
(22) Date of filing: 11.01.2008
(51) Int. Cl.: H04W 12/08, H04L 29/06, H04L 29/08

(54) **SECURING CONTACT INFORMATION**
SICHERUNG VON KONTAKTINFORMATIONEN
SÉCURISATION D'INFORMATIONS DE CONTACT

(43) Date of publication of application: 17.11.2010
(73) Proprietor: Telefonaktiebolaget LM Ericsson (publ), 164 83 Stockholm (SE)
(72) Inventor: LINDHOLM, Fredrik, 112 15 Stockholm (SE); SOLOVIEV, Mikhail, S-172 70 Sundbyberg (SE)
(74) Representative: Ericsson
(86) International application number: PCT/EP2008/050282
(87) International publication number: WO 2009/086938

(56) References cited:
- WO-A-2006/016846
- WO-A-2007/121663
- GB-A- 2 425 685
- US-A1- 2005 071 679
- "Enable service execution in IMS based on Access Network type" IP.COM JOURNAL, IP.COM INC., WEST HENRIETTA, NY, US, 3 May 2006 (2006-05-03), XP013113975 ISSN: 1533-0001

## Description

### Technical Field

The present invention relates to securing subscriber contact information within an IP Multimedia Subsystem (IMS). In particular, the invention relates to the provision of subscription related policies that describe when a subscriber can access or change stored contact information.

### Background

IP Multimedia Subsystem (IMS) is the technology defined by the Third Generation Partnership Project (3G) to provide IP Multimedia services over mobile communication networks. IMS provides key features to enrich the end-user person-to-person communication experience through the use of standardised IMS Service Enablers, which facilitate new rich person-to-person (client-to-client) communication. The IMS is able to connect to both PSTN/ISDN (Public Switched Telephone Network/Integrated Services Digital Network) as well as the Internet.

IMS provides a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The IMS makes use of the Session Initiation Protocol (SIP) to set up and control calls or sessions between user terminals (or user terminals and application servers). SIP makes it possible for a calling party to establish a packet switched session to a called party (using so-called SIP User Agents, UAs, installed in the user terminals) even though the calling party does not know the current IP address of the called party prior to initiating the call. The Session Description Protocol (SDP), carried by SIP signalling, is used to describe and negotiate the media components of the session. Whilst SIP was created as a user-to-user protocol, IMS allows operators and service providers to control user access to services and to charge users accordingly.

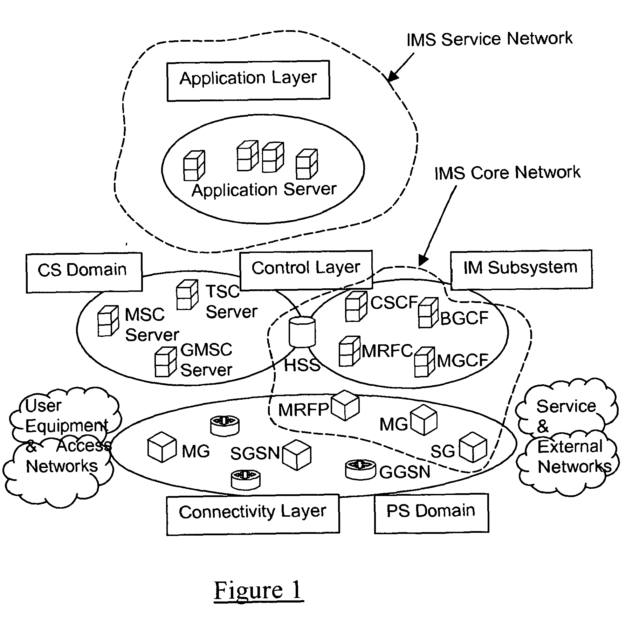

Figure 1 of the accompanying drawings illustrates schematically how the IMS fits into the mobile network architecture in the case of a GPRS/PS access network (IMS can of course operate over other access networks). Call/Session Control Functions (CSCFs) operate as SIP proxies within the IMS. The 3G architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

In order to participate in multimedia sessions, the user must register at least one public user identity (IMPU) with the network and a private user identity (IMPI) must be authenticated in the IMS at the application level. The private user identity and public user identities are stored in an IMS Services Identity Module (ISIM) application on a UMTS Integrated Circuit Card (UICC) at the user's terminal.

A public user identity belonging to an IMS user is used by peer users to request communications. A user might for example include a public user identity (but not a private user identity) on a business card. 3G TS 23.228 specifies the following properties of the public user identity:
- A public user identity takes the form of a SIP URI (as defined in RFC 3261 and RFC 2396 or the "tel:"-URI format defined in RFC 3966).
- An ISIM application shall securely store at least one public user identity but it is not required that all additional public user identities be stored on the ISIM application.
- A public user identity shall be registered either explicitly or implicitly before the identity can be used to originate IMS sessions and IMS session unrelated procedures.
- A public user identity shall be registered either explicitly or implicitly before terminating IMS sessions and terminating IMS session unrelated procedures can be delivered to the UE of the user that the public user identity belongs to.
- It shall be possible to register globally (i.e. through one single UE request) a user that has more than one public user identity via a mechanism within the IMS (e.g. by using an Implicit Registration Set). This shall not preclude the user from registering individually some of his/her public user identities if needed.
- Public user identities are not authenticated by the network during registration.
- Public user identities may be used to identify the user's information within the HSS (for example during mobile terminated session set-up).

The private user identity is assigned by the home network operator and is mainly used by the IMS for registration and authentication purposes although it can also be utilised for accounting and administration purposes. 3G TS 23.228 specifies the following properties of the private user identity:
- The private user identity takes the form of a Network Access Identifier (NAI) as defined in RFC 2486.
   - The private user identity is not used for routing of SIP messages.
   - The private user identity shall be contained in all Registration requests, (including Re-registration and De-registration requests) passed from the UE to the home network.
   - An ISIM application shall securely store one private user identity. It shall not be possible for the UE to modify the private user identity information stored on the ISIM application.
   - The private user identity is a unique global identity defined by the Home Network Operator, which may be used within the home network to identify the user's subscription (e.g. IM service capability) from a network perspective. The private user identity identifies the subscription, not the user.
   - The private user identity shall be permanently allocated to a user's subscription (it is not a dynamic identity), and is valid for the duration of the user's subscription with the home network.
   - The private user identity is used to identify the user's information (for example authentication information) stored within the HSS (for use for example during Registration).
   - The private user identity may be present in charging records based on operator policies.
   - The private user identity is authenticated only during registration of the user, (including re-registration and de-registration).
   - The HSS needs to store the private user identity.
   - The S-CSCF needs to obtain and store the private user identity upon registration and unregistered termination.

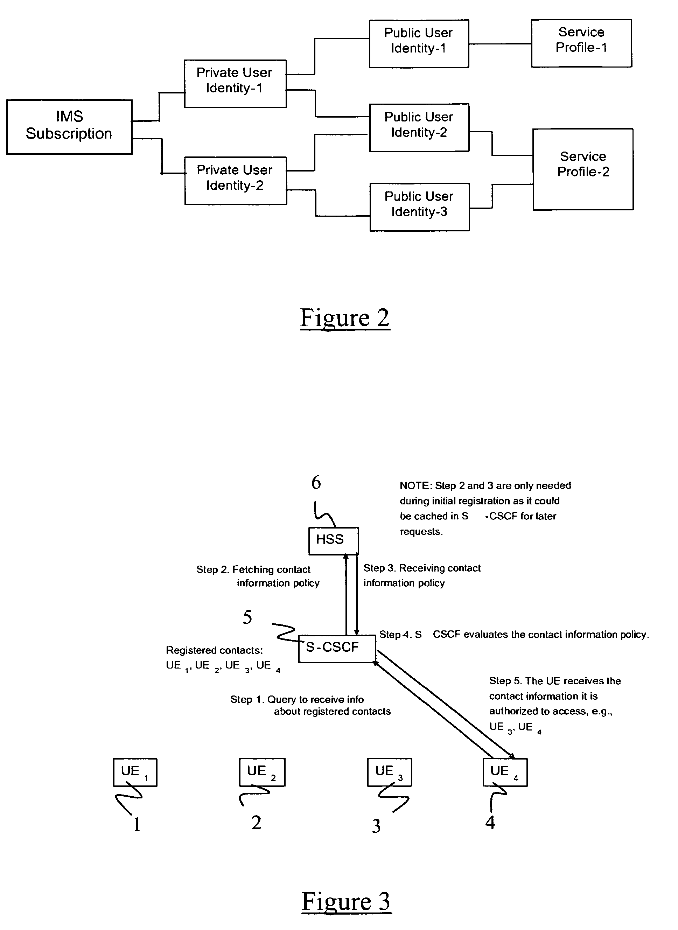

Figure 2 illustrates schematically example relationships between a user IMS subscription and the public and private user identities. In the example shown, a subscriber has two private user identities, with both being associated with two public user identities (one of the public user identities, IMPU-2, being associated with both private user identities). A service profile is associated with each public user identity, this profile specifying service data for the associated public user identity. A service profile is created or modified when an application server is provisioned for a user at the Home Subscriber Server. Each service profile comprises a collection of service and user related data, which includes, among other things, one or more initial Filter Criteria (iFC) which are used to trigger the provision, or restriction, of IMS services. The differences between services offered by service profile-1 and service profile-2 are operator specific, but may involve different application servers, and even different charging/rating schemes. One or more service profiles are contained within the user profile that is downloaded from a HSS to the S-CSCF following registration with the IMS.

In the example, IMPU-1 is associated with a Service Profile-1, whilst IMPU-2 and IMPU-3 are associated with Service Profile-2. In a typical scenario, the IMPU-1 might be an identity that the user gives to friends and family, e.g. "Big_Joe@priv.operator.com", whilst IMPU-2 and IMPU-3 might be identities that the user gives to business contacts, e.g. "±46111222333@operator.com" and "joe.black@operator.com".

In addition, a user can group multiple public user identities into Implicit Registration Sets (IRS). When the user registers any of the public user identities within an IRS, all of the other (non-barred) public user identities within that IRS are also registered in the network. During the registration procedure, the user's terminal is informed about the complete set of public user identities that were registered in the network as a result of the registration procedure. The terminal may then use any of these public user identities to originate outgoing communications and can expect to receive incoming communications to any of these public user identities.

The UE can perform registration of additional public user identities at any time after the initial registration has been completed and a particular public user identity may be simultaneously registered from multiple UEs that use different private user identities and different contact addresses. The UE can also deregister or perform the re-registration of a previously registered public user identity with its contact address at any time after the initial registration has been completed. In addition, there might be other contact addresses available, that other UEs have registered for the same public user identity.

A user possessing a "direct" IMS terminal (UE), e.g. a cellular telephone or smartphone, registers with the IMS using the SIP REGISTER method. This is a mechanism whereby a user binds one or more public user identities to a contact address that contains the SIP URI of the location at which the UE can be reached. In the case of a UE attached to a 3G access network, the UE discovers the address of the P-CSCF that it is to use as a SIP outbound proxy during registration. The UE then sends a REGISTER message to the home network to register the user's public user identity. The P-CSCF processes the REGISTER request and uses the domain name provided in the public user identity to resolve the address of the I-CSCF and forwards the REGISTER request to this I-CSCF. The I-CSCF contacts the Home Subscriber Server (HSS) to obtain the required capabilities for S-CSCF selection, selects an appropriate S-CSCF based on the received capabilities and forwards the REGISTER request to the selected S-CSCF. The S-CSCF will then retrieve an Authentication Vector (AV) from the HSS relating to the private user identity provided in the REGISTER request and challenges the UE with a 401 (Unauthorized) response containing some of the parameters provided in the AV. Upon receipt of the 401 response the UE generates an authentication challenge response and sends this in a second REGISTER request back to the S-CSCF where verification is performed. A pair of security associations are generated during the authenticated SIP registration and are subsequently used to secure SIP signalling exchanged between the UE and the P-CSCF.

More specifically, the current 3G IMS specifications mandate the use of IMS Authentication and Key Agreement (IMS-AKA) procedures for authentication of users to the IMS network during registration. These procedures are described in 3G TS 24.229 and 33.203. Within the UE, the ISIM contains a key that is also present in the HSS in the home operator's network, the "shared" secret key. This shared secret key is used by the ISIM to generate the authentication challenge response. However, it is likely that in practice IMS will allow other authentication procedures to be implemented including the so called "early-IMS" procedure.

Users may register with the IMS, and access IMS services, via access networks other than a 3G access network. For example, a user may use a PC to access the IMS via the Internet (an HTTP interface) in which case a SIP AS performs the SIP REGISTER method on behalf of the PC, acting as a back-to-back SIP User Agent. In another example, where the PC contains an IMS client, the user may access the IMS through either a P-CSCF or a Session Controller connected to IMS. In these cases, authentication may be performed using IMS AKA or early-IMS, or possibly using NASS-IMS bundled authentication, HTTP digest authentication or GAA/GBA. Other suitable authentication procedures may be developed in the future. In the case of a user having a 2G terminal, IMS services may be accessed via an enhanced MSC within the core network. However, in this case, it is possible that no IMS authentication will be performed at all.

In a typical use case, a user (IMS subscriber) may possess a number of devices including a 3G mobile phone, a 2G mobile phone, and an Internet connected PC (with or without an IMS client). Each of these would possess its own IMPI which would be tied to one or more corresponding IMPUs (in the case of a broadband terminal or PC, the IMPI may be username entered by the user). The HSS within the IMS would maintain, as part of the user's subscription profile, the mappings between the IMPIs and the IMPUS. When the user registers with the IMS using one of the devices, the user would be authenticated within the IMS using one of the authentication procedures described above. The IMS would register contact addresses for the or each IMPU associated with the IMPI of the device from which registration is made.

Whilst the IMS will only allow the registering device to register contact addresses for IMPU(s) associated (in the user profile) with the IMPI of the registering device, there is as yet no mechanism for preventing a user from retrieving contact information already registered in respect of these same IMPUs but associated with a different IMPI, i.e. a different device. Moreover, there is nothing to prevent the user from modifying, or even deleting that contact information. Whilst this may not be problematic where the authentication method used (to register the "new" device) is secure, e.g. IMS AKA, and the access network is closed, it may represent a security risk where a less secure mechanism is used, e.g. HTTP digest authentication, and/or the access network is open, e.g. the Internet. If an attacker is able to register by breaking a weak authentication mechanism, this may allow him to determine the current location of a 3G terminal, and hence the location of the user.

US 2005/0071679 discloses that a network entity, such as an S-CSCF, can verify if a device/entity is authorised to have access to user state information. These authorised devices/entities may include all non-barred public user identities, all entities that have been included in a PATH header field previously sent to the S-CSCF in a register request, and all application servers not belonging to third party providers. A user can therefore access their state information provided that their public user identity is not barred (i.e. all non-barred public user identities are authorised). As such, a user with a valid public user identity can always access their state information, irrespective of when, where or how their public user identity was registered.

WO2006/016846 relates to the creation of a unique Public Service Identity (PSI), and populating this PSI in a Home Subscriber Server (HSS), in which an SLF or a HSS will only allow an AS to deactivate a PSI if that AS created and activated that PSI. However, a PSI identifies the services hosted by an AS, and does not identify a user.

GB2425685 A relates to informing a user terminal and/or an application server that public user identities of the terminal user are associated with a common service profile.

WO2007/121663 relates to a method for a mobile circuit-switched user to access an IMS network. According to this document, an S-CSCF may initiate a third party registration to an AS depending upon its evaluation of the Initial Filter Criteria (IFC). However, the IFC are used by an S-CSCF to determine if and when it should contact an AS, and if so, which AS they should contact. The IFC do not define if and under what circumstances a user can view or delete their contact information.

### Summary

It is an object of the present invention to overcome or at least mitigate the problem noted above. This object is achieved by introducing into the IMS a contact information access policy or policy which specifies if and under what circumstances a user can access, change, and/or delete registered contact information.

According to a first aspect of the present invention there is provided a method of controlling user access to contact information associated with public user identities and private user identities registered in respect of the user's subscription within an IP Multimedia Subsystem. The method comprises configuring a Serving Call/Session Control Function assigned to the user, with one or more contact information access policy or policies, the contact information access policy or policies defining if and under what circumstances the user can view, modify or delete contact information registered in respect of one or more respective private user identities different from that used by the user to make a request, where the private user identities are all associated with the same user subscription. Upon a request by the user, sent from a user terminal registered with a given one of said private user identities, to view, modify or delete contact information in respect of one or more further user terminals registered with respective different private user identities, the Serving Call/Session Control Function evaluates and enforces these contact information policy or policies, where evaluating and enforcing these policy or policies comprises applying to the request the contact information access policy or policies and providing to the user only that contact information allowed by the policy or policies.

Embodiments of the invention provide a means for restricting a user's access to contact information in certain circumstances. This increases the system's security, making it harder for an attacker to view sensitive contact information for some other user.

Preferably, said contact information access policy or policies is or are maintained within a Home Subscriber Server. Said Serving Call/Session Control Function is configured with the policy or policies at registration of a private user identity or upon receipt of said request at the Serving Call/Session Control Function.

Several policy types are possible including:
∘ An access policy based upon an authentication mechanism used by the user to register with the IP Multimedia Subsystem. The policy may be further based upon the authentication mechanism(s) used to register contact information requested by the user. A used authentication mechanism may be determined during a Multimedia Authentication Request/Multimedia Authentication Answer exchange between said Serving Call/Session Control Function and a Home Subscriber Server.
∘ An access policy based upon a location of the user. The location of the user may be determined based upon a P-access-network-info-header contained within a Session Initiation Protocol REGISTER sent by the user at IP Multimedia Subsystem registration.
∘ An access policy may restrict user access to contact information registered in respect of a private user identity different from that used by said user.
   - An access policy may allow user access to contact information registered in respect of a private user identity different from that used by said user.

In a typical scenario, the contact information registered with the IMS in respect of public user identities comprises one or more Session Initiation Protocol and/or Tel Universal Resource Identifiers. Moreover, said request may be made by way of a SIP REGISTER or SUBSCRIBE sent from a UE to the IMS (SCSCF).

According to a second aspect of the present invention there is provided apparatus for implementing a Serving Call/Session Control Function for controlling user access to contact information associated with public user identities and and private user identities registered in respect of the user's subscription within an IP Multimedia Subsystem. The apparatus is configured to receive from a user terminal registered with a given one of said private user identities, a request to view, modify or delete contact information registered in respect of one or more further user terminals associated with respective different private user identities, where the private user identities are all associated with the same user subscription. The apparatus is further configured to evaluate and enforce a contact information access policy or policies, said contact information access policy or policies defining if and under what circumstances the user terminal can view, modify or delete contact information associated with private user identities different from that used by the user to make the request, by applying to the request the contact information access policy or policies and providing to the requesting user terminal only that contact information allowed by the policy or policies.

The apparatus may comprise means for retrieving said policy or policies from a Home Subscriber Server at registration of said user terminal or upon receipt of said request.

### Brief Description of the Drawings

Figure 1 illustrates schematically the integration of an IP Multimedia Subsystem into a 3G mobile communications system;
Figure 2 illustrates schematically example relationships between a user (IMS) subscription and the Public and Private User Identities;
Figure 3 illustrates schematically components of an IP Multimedia Subsystem and details steps performed therein for the purpose of enforcing a contact address related policy;
Figure 4a is a flow diagram illustrating a contact information registration procedure;
Figure 4b is a flow diagram illustrating a contact address related policy enforcement procedure; and
Figure 5 illustrates schematically a Serving Call Session Control Function node provided within the IP Multimedia Subsystem of Figure 3.

### Detailed Description

As has already been discussed, IP Multimedia Subsystem (IMS) registration results in a binding being made between one or more Public User Identities (IMPUs) and a current contact Universal Resource Identifier (URI). The contact URI is used to route SIP traffic to and from a user's terminal (UE). Within the IMS, the binding between the IMPU(s) and the contact URI is stored within the Serving Call Session Control Function (S-CSCF) until the user is de-registered at some later time. During registration, the S-CSCF also downloads and stores the user's profile from the Home Subscriber Server (HSS).

It is typically the case that a given UE will be assigned a unique IMPI. However, as is clear from Figure 2, different IMPIs can be mapped to a common IMPU. A user registering in the IMS via one UE may therefore have access to, and be able to modify, contact information in respect of an IMPU for which contact information has already been registered via a different UE, unless some access control process is introduced. In some cases, the newly registered UE may also be able to obtain and modify contact information for other IMPUs associated with the same subscription even though these IMPUs are not associated with the IMPI of the UE.

It is proposed here to include within the user profile stored in the HSS one or more contact information related policies. The purpose of the new policy (or policies) is to define those actions which a user can take in respect of the stored contact information following registration, and under what circumstances the actions can be taken. For example, a policy may define if and under what circumstances a user agent/terminal can retrieve and/or delete contact information registered with the IMS network. A policy may also/alternatively define if and under what circumstances a user agent/terminal registering one or more IMPUs can retrieve and/or update (e.g. delete) contact information associated with these or other IMPUs. A policy may also/alternatively define when certain actions may be performed based upon the properties of a user's registration.

Considering this in more detail, example policies are as follows:
- A policy may specify the actions which a user, registering using one specific IMPI, can take in respect of already registered contact information. Thus, for example, a user using a fixed broadband terminal and registering the IMPUs "Big_Joe@priv.operator.com", "+46111222333@operator.com" and "joe.black@operator.com", may not be allowed to subsequently retrieve and/or modify the contact information previously registered for the latter two (business related) IMPUs. He may only be allowed to retrieve and modify contact information already registered in respect of the former (personal) IMPU. This does not preclude the user from retrieving and modifying contact information registered in respect of the business related IMPUs by the terminal itself.
- A policy may define that certain actions can only be performed when the authentication procedure used during registration is sufficiently secure. Thus, a user registered using the HTTP digest authentication procedure may not be allowed to delete already registered contact information, whilst a user registering using the IMS AKA procedure may be allowed to perform all actions in respect of already registered contact information. In practice, this may mean, for example, that a user registering an IMPU via the Internet may not be able to retrieve and/or modify already registered contact information associated with this or other IMPUs.
- A policy may define when actions can be taken, based upon the location of the user when registering. Thus, a user registering via an Internet access may not be allowed to view or modify already registered contact information, whilst a user registering from a GPRS network may allowed to perform all actions in respect of the already registered contact information.
- A policy may define when actions can be taken, based upon the service allowed for the IMPU. As an example, if the user is making use of a free service, he or she may be allowed to view or modify contact information associated with any terminal (i.e. low security), whilst a user making use of a premium service with extra privacy functionality may be restricted to performing all actions only in respect of registered contact information from a dedicated terminal.

Of course, a policy may define if and under what circumstances actions can be taken, with a greater degree of granularity than that considered above. For example, a policy may define that a user can only view or delete contact information already registered using a specific authentication mechanism, or from a specific location. Thus for example a user registering contact information for an IMPU via the Internet may only be able to view and modify the contact information associated with other IMPUs also registered via the Internet.

Figure 3 illustrates schematically a set of four UE's (UE₁ -UE₄) 1 to 4 which are assumed to belong to a single user. Each of the UEs is registered with the IMS using a distinct IMPI. Within the IMS, the four IMPIs are associated with a single subscription, and are all associated with the same pair of IMPUs, namely IMPU1 and IMPU2. The various UEs may be coupled to the S-CSCF 5 via a "direct" IMS connection, e.g. via a 3G access network, fixed broadband network, or 2G network.

Consider the case where UE₄ sends a request (step 1) to the S-CSCF 5 to retrieve the contact information of the registered public user identities, IMPU1 and IMPU2, in respect of all four UEs. Upon receipt of the request, the S-CSCF contacts (step 2) the HSS 6 to request the contact information policies stored in the user profile associated with the private user identity of UE₄. The S-CSCF receives (step 3) the contact information policies from the HSS 6 and evaluates the criteria (step 4) to determine if, in the current circumstances, UE₄ is allowed to access this contact information. As a result of this evaluation, the S-CSCF 5 responds to UE₄ with the contact information that it is allowed to access, or, if no access is permitted, informs UE₄ accordingly. In this example, UE₄ is only allowed to access the information associated with UE₃ and itself, and will hence only receive the contact information for IMPU1 and IMPU2 related to UE₃, and UE₄.

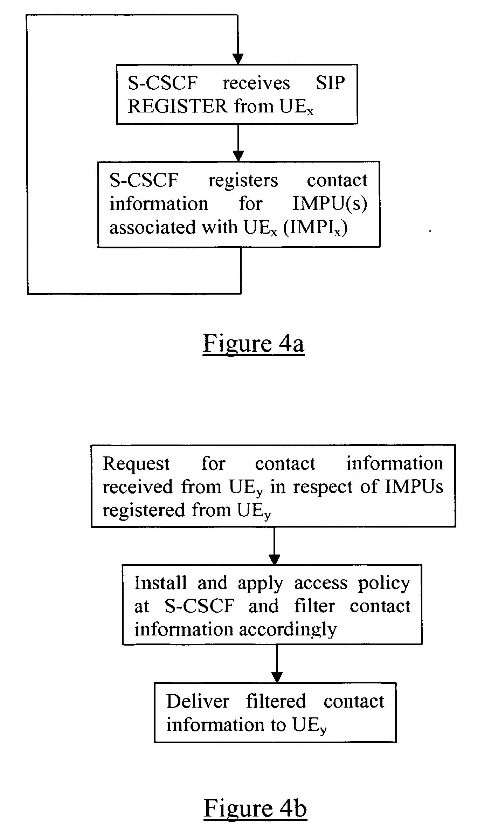

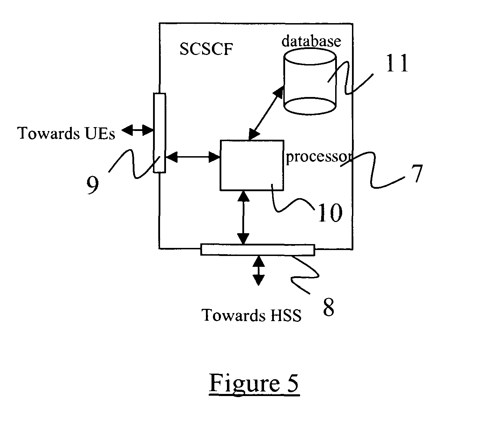

Figure 4a is a flow diagram illustrating a procedure for registering contact information in respect of a set of UEs. Figure 4b is a flow diagram illustrating the procedure for installing and applying contact information access policies at the S-CSCF, and for delivering filtered contact information to UEs. Figure 5 illustrates schematically an S-CSCF architecture for implementing the procedure. The S-CSCF 7 includes a first interface 8 towards the HSS, and a second interface (or interfaces) 9 towards the UEs. Processors 10 within the S-CSCF handle the processing of SIP REGISTER messages, and apply access policies to received contact information requests. User profiles, downloaded from the HSS, are stored in memory 11, and contain both registered contact information, any associated tags, and contact information access policies.

During the registration process for UE₄, the S-CSCF may be able to download and cache the contact information policies as part of the user profile, such that steps (2) and (3) described above are only needed during initial registration. This is in practice done by extending the Cx interface (between the S-CSCF and HSS) with a new AVP/parameter containing the contact information policy. The S-CSCF then enforces these policies upon receipt of an incoming request.

In the case where access is dependent upon the authentication procedure used during registration, the S-CSCF may identify the authentication procedure during the Multimedia Authentication Request (MAR)/Multimedia Authentication Answer (MAA) exchange between the S-CSCF and the HSS (performed prior to steps (2) and (3)). To enforce a contact information policy based on location information, the S-CSCF can obtain the location information either from the SIP REGISTER request received from the user (this is included in the P-access-network-info-header), or from the HSS in the case that the HSS knows this information.

In order to allow policies to be applied with a greater degree of granularity, registered contact information for an IMPU can be tagged (in the user profile stored in the HSS/SCSCF) with the relevant properties. Hence, when the S-CSCF receives an incoming request to deliver contact information to a given UE, the S-CSCF will check the appropriate policy and tags to determine how to respond. For example, the S-CSCF could identify that the requesting UE has registered via the Internet, with the contact information policy defining that such a UE can only receive information about contacts that have been registered with the IMS using the same access method. The S-CSCF will then only return the appropriate contact information.

It will be appreciated by the person of skill in the art that various modifications may be made to the above described embodiment without departing from the scope of the present invention.

## Claims

1. A method of controlling user access to contact information associated with public user identities and private user identities registered in respect of the user's subscription within an IP Multimedia Subsystem, the method **characterised by**:
configuring a Serving Call/Session Control Function (5) assigned to a user with one or more contact information access policy or policies, the contact information access policy or policies defining if and under what circumstances the user can view, modify or delete contact information registered in respect of one or more respective private user identities different from that used by the user to make a request, where the private user identities are all associated with the same user subscription;
upon a request by the user, sent from a user terminal registered with a given one of said private user identities, to view, modify or delete contact information in respect of one or more further user terminals registered with respective different private user identities, evaluating and enforcing these contact information policy or policies at the Serving Call/Session Control Function (5),
wherein evaluating and enforcing these policy or policies comprises applying to the request the contact information access policy or policies and providing to the user only that contact information allowed by the policy or policies.

2. A method according to claim 1 and comprising maintaining said contact information access policy or policies within a Home Subscriber Server, and configuring said Serving Call/Session Control Function with the policy or policies at registration of a private user identity or upon receipt of said request at the Serving Call/Session Control Function.

3. A method according to any one of the preceding claims, wherein a contact information policy defines an access based upon an authentication mechanism used by the user to register with the IP Multimedia Subsystem.

4. A method according to claim 3, said policy being further based upon the authentication mechanism(s) used to register contact information requested by the user.

5. A method according to claim 3 or 4 and comprising determining a used authentication mechanism during a Multimedia Authentication Request/Multimedia Authentication Answer exchange between said Serving Call/Session Control Function and a Home Subscriber Server.

6. A method according to any one of the preceding claims, wherein a contact information policy defines an access based upon a location of the user.

7. A method according to claim 6 and comprising determining the location of the user based upon a P-access-network-info-header contained within a Session Initiation Protocol REGISTER sent by the user at IP Multimedia Subsystem registration.

8. A method according to any one of the preceding claims, wherein a contact information policy restricts user access to contact information registered in respect of a private user identity different from that used by said user.

9. A method according to any one of the preceding claims, wherein a contact information policy allows user access to contact information registered in respect of a private user identity different from that used by said user.

10. A method according to any one of the preceding claims, wherein said contact information comprises one or more Session Initiation Protocol and/or Tel Universal Resource Identifiers.

11. A method according to any one of the preceding claims and comprising storing contact information at the Serving Call/Session Control Function, information entries being tagged to permit application of the access policy or policies.

12. Apparatus for implementing a Serving Call/Session Control Function (7) for controlling user access to contact information associated with public user identities and private user identities registered in respect of the user's subscription within an IP Multimedia Subsystem, the apparatus **characterised by** being configured to receive (9) from a user terminal registered with a given one of said private user identities, a request to view, modify or delete contact information registered in respect of one or more further user terminals associated with respective different private user identities, where the private user identities are all associated with the same user subscription, the apparatus being further configured to evaluate and enforce (8, 10, 11) a contact information access policy or policies, said contact information access policy or policies defining if and under what circumstances the user terminal can view, modify or delete contact information associated with private user identities different from that used by the user to make the request, by applying to the request the contact information access policy or policies and providing (9) to the requesting user terminal only that contact information allowed by the policy or policies.

13. Apparatus according to claim 12 and comprising means for retrieving said policy or policies from a Home Subscriber Server.

14. Apparatus according to claim 13, said means for retrieving being arranged to retrieve said policy or policies at registration of said user terminal or upon receipt of said request.

## Patentansprüche

1. Verfahren zur Steuerung von Benutzerzugriff auf Kontaktinformationen, die mit öffentlichen Benutzerkennungen und privaten Benutzerkennungen assoziiert sind, die in Bezug auf ein Abonnement des Benutzers in einem IP-Multimedia-Subsystem registriert sind, wobei das Verfahren **gekennzeichnet ist durch**:
Konfigurieren einer versorgenden Ruf-/Sitzungssteuerfunktion (5), die einem Benutzer zugeteilt ist, mit einer oder mehreren Kontaktinformationszugriffsrichtlinie(n), wobei die Kontaktinformationszugriffsrichtlinie(n) definieren, ob und unter welchen Umständen der Benutzer Kontaktinformationen, die in Bezug auf eine oder mehrere jeweilige private Benutzerkennungen registriert sind, die von der vom Benutzer zum Stellen einer Anforderung verwendeten verschieden sind, anzeigen, modifizieren oder löschen darf, wobei die privaten Benutzerkennungen allesamt mit dem gleichen Benutzerabonnement assoziiert sind;
Beurteilen und Durchsetzen dieser Kontaktinformationsrichtlinie(n) an der versorgenden Ruf-/Sitzungssteuerfunktion (5) bei einer Anforderung vom Benutzer, die von einem Benutzerendgerät gesendet wird, das mit einer der privaten Benutzerkennungen registriert ist, zum Anzeigen, Modifizieren oder Löschen von Kontaktinformationen in Bezug auf ein oder mehrere weitere Benutzerendgeräte, die mit jeweiligen verschiedenen privaten Benutzerkennungen registriert sind, wobei das Beurteilen und Durchsetzen dieser Richtlinie(n) ein Anwenden der Kontaktinformationszugriffsrichtlinie(n) auf die Anforderung und Bereitstellen nur der **durch** die Richtlinie(n) zugelassenen Kontaktinformationen für den Benutzer umfasst.

2. Verfahren nach Anspruch 1 und umfassend ein Bewahren der Kontaktinformationszugriffsrichtlinie(n) innerhalb eines Heimat-Teilnehmerservers und Konfigurieren der versorgenden Ruf-/Sitzungssteuerfunkton mit den Richtlinie(n) bei Registrierung einer privaten Benutzerkennung oder bei Empfang der Anforderung an der versorgenden Ruf-/Sitzungssteuerfunktion

3. Verfahren nach einem der vorhergehenden Ansprüche, wobei eine Kontaktinformationsrichtlinie einen Zugriff auf der Basis eines Authentisierungsmechanismus definiert, der vom Benutzer verwendet wird, um sich beim IP-Multimedia-Subsystem zu registrieren.

4. Verfahren nach Anspruch 3, wobei die Richtlinie ferner auf dem Authentisierungsmechanismus oder den Authentisierungsmechanismen basiert, der/die zum Registrieren von Kontaktinformationen verwendet wird/werden, die vom Benutzer angefordert werden.

5. Verfahren nach Anspruch 3 oder 4 und umfassend ein Bestimmen eines verwendeten Authentisierungsmechanismus während eines Austauschs von Multimedia-Authentisierungsanforderung/Multimedia-Authentisierungsantwort zwischen der versorgenden Ruf-/Sitzungssteuerfunktion und einem Heimat-Teilnehmerserver.

6. Verfahren nach einem der vorhergehenden Ansprüche, wobei eine Kontaktinformationsrichtlinie einen Zugriff auf der Basis eines Aufenthaltsorts des Benutzers definiert.

7. Verfahren nach Anspruch 6 und umfassend ein Bestimmen des Aufenthaltsorts des Benutzers basierend auf einem P-Zugangsnetz-Info-Header, der in einem Sitzungseinleitungsprotokoll REGISTER enthalten ist, das vom Benutzer bei Registrierung beim IP-Multimedia-Subsystem gesendet wird.

8. Verfahren nach einem der vorhergehenden Ansprüche, wobei eine Kontaktinformationsrichtlinie Benutzerzugriff auf Kontaktinformationen beschränkt, die in Bezug auf eine private Benutzerkennung registriert sind, die von der vom Benutzer verwendeten verschieden ist.

9. Verfahren nach einem der vorhergehenden Ansprüche, wobei eine Kontaktinformationsrichtlinie Benutzerzugriff auf Kontaktinformationen erlaubt, die in Bezug auf eine private Benutzerkennung registriert sind, die von der vom Benutzer verwendeten verschieden ist.

10. Verfahren nach einem der vorhergehenden Ansprüche, wobei die Kontaktinformationen eine oder mehrere Sitzungseinleitungsprotokoll- und/oder universelle Tel-Ressourcenkennungen umfassen.

11. Verfahren nach einem der vorhergehenden Ansprüche und umfassend ein Speichern von Kontaktinformationen an der versorgenden Ruf-/Sitzungssteuerfunktion, wobei Informationseinträge markiert werden, um Anwendung der Zugriffsrichtlinie(n) zu ermöglichen.

12. Vorrichtung zum Implementieren einer versorgenden Ruf-/Sitzungssteuerfunktion (7) zum Steuern von Benutzerzugriff auf Kontaktinformationen, die mit öffentlichen Benutzerkennungen und privaten Benutzerkennungen assoziiert sind, die in Bezug auf ein Abonnement des Benutzer in einem IP-Multimedia-Subsystem registriert sind, wobei die Vorrichtung **dadurch gekennzeichnet ist, dass** sie so konfiguriert ist, dass sie von einem Benutzerendgerät, das mit einer bestimmten der privaten Benutzerkennungen registriert ist, eine Anforderung zum Anzeigen, Modifizieren oder Löschen von Kontaktinformationen empfängt (9), die in Bezug auf ein oder mehrere weitere Benutzerendgeräte registriert sind, die mit jeweiligen verschiedenen privaten Benutzerkennungen assoziiert sind, wobei die privaten Benutzerkennungen allesamt mit dem gleichen Benutzerabonnement assoziiert sind, die Vorrichtung ferner so konfiguriert ist, dass sie Kontaktinformationszugriffsrichtlinie(n) durch Anwenden der Kontaktinformationszugriffsrichtlinie(n) auf die Anforderung und Bereitstellen (9) nur der durch die Richtlinie(n) zugelassenen Kontaktinformationen für das anfordernde Benutzerendgerät beurteilt und durchsetzt (8, 10, 11), wobei die Kontaktinformationszugriffsrichtlinie(n) definieren, ob und unter welchen Umständen das Benutzerendgerät Kontaktinformationen, die mit privaten Benutzerkennungen assoziiert sind, die von der vom Benutzer zum Stellen einer Anforderung verwendeten verschieden sind, anzeigen, modifizieren oder löschen darf.

13. Vorrichtung nach Anspruch 12 und umfassend Mittel zum Abrufen der Richtlinie(n) von einem Heimat-Teilnehmerserver.

14. Vorrichtung nach Anspruch 13, wobei die Mittel zum Abrufen so ausgelegt sind, dass sie die Richtlinie(n) bei Registrierung des Benutzerendgeräts oder bei Empfang der Anforderung abrufen.

## Revendications

1. Procédé de contrôle d'accès d'utilisateur à des informations de contact associées à des identités d'utilisateur publiques et des identités d'utilisateur privées enregistrées en ce qui concerne l'abonnement de l'utilisateur à l'intérieur d'un sous-système multimédia IP, le procédé étant **caractérisé par** :
la configuration d'une fonction de commande de session d'appel de desserte (5) assignée à un utilisateur avec une ou plusieurs politiques d'accès aux informations de contact, l'une ou plusieurs politiques d'accès aux informations de contact définissant si et dans quelles circonstances l'utilisateur peut visualiser, modifier ou supprimer des informations de contact enregistrées en ce qui concerne une ou plusieurs identités d'utilisateur privées respectives différentes de celle utilisée par l'utilisateur pour effectuer une demande, dans lequel toutes les identités d'utilisateur privées sont associées au même abonnement d'utilisateur ;
à la demande de l'utilisateur, envoyée depuis un terminal d'utilisateur enregistré avec l'une donnée desdites identités d'utilisateur privées, pour visualiser, modifier ou supprimer des informations de contact en ce qui concerne un ou plusieurs autres terminaux d'utilisateur enregistrés avec des identités d'utilisateur privées différentes respectives, l'évaluation et l'exécution de l'une ou plusieurs politiques d'informations de contact à la fonction de commande de session d'appel de desserte (5), dans lequel l'évaluation et l'exécution de l'une ou plusieurs politiques comprend l'application, à la demande, de l'une ou plusieurs politiques d'accès aux informations de contact et la fourniture, à l'utilisateur, uniquement des informations de contact autorisées par l'une ou plusieurs politiques.

2. Procédé selon la revendication 1, comprenant le maintien de l'une ou plusieurs politiques d'accès aux informations de contact à l'intérieur d'un serveur d'abonné de rattachement, et la configuration de ladite fonction de commande de session d'appel de desserte avec l'une ou plusieurs politiques à l'enregistrement d'une identité d'utilisateur privée ou à la réception de ladite demande à la fonction de commande de session d'appel de desserte.

3. Procédé selon l'une quelconque des revendications précédentes, dans lequel une politique d'informations de contact définit un accès sur la base d'un mécanisme d'authentification utilisé par l'utilisateur pour s'enregistrer avec le sous-système multimédia IP.

4. Procédé selon la revendication 3, dans lequel ladite politique est en outre basée sur l'un ou plusieurs mécanismes d'authentification utilisés pour enregistrer des informations de contact demandées par l'utilisateur.

5. Procédé selon la revendication 3 ou 4, comprenant la détermination d'un mécanisme d'authentification utilisé au cours d'un échange de demande d'authentification multimédia/réponse d'authentification multimédia entre ladite fonction de commande de session d'appel de desserte et un serveur d'abonné de rattachement.

6. Procédé selon l'une quelconque des revendications précédentes, dans lequel une politique d'informations de contact définit un accès basé sur un emplacement de l'utilisateur.

7. Procédé selon la revendication 6, comprenant la détermination de l'emplacement de l'utilisateur sur la base d'un en-tête d'informations de réseau d'accès P contenu à l'intérieur d'un registre de protocole d'ouverture de session envoyé par l'utilisateur à l'enregistrement du sous-système multimédia IP.

8. Procédé selon l'une quelconque des revendications précédentes, dans lequel une politique d'informations de contact restreint l'accès de l'utilisateur à des informations de contact enregistrées en ce qui concerne une identité d'utilisateur privée différente de celle utilisée par ledit utilisateur.

9. Procédé selon l'une quelconque des revendications précédentes, dans lequel une politique d'informations de contact autorise l'accès de l'utilisateur à des informations de contact enregistrées en ce qui concerne une identité d'utilisateur privée différente de celle utilisée par ledit utilisateur.

10. Procédé selon l'une quelconque des revendications précédentes, dans lequel lesdites informations de contact comprennent un ou plusieurs identifiants de protocole d'ouverture de session et/ou de ressources universelles de télécommunications.

11. Procédé selon l'une quelconque des revendications précédentes, comprenant la mémorisation d'informations de contact à la fonction de commande de session d'appel de desserte, dans lequel les entrées d'informations sont étiquetées pour permettre l'application de l'une ou plusieurs politiques d'accès.

12. Appareil de mise en oeuvre d'une fonction de commande de session d'appel de desserte (7) pour contrôler l'accès d'un utilisateur à des informations de contact associées à des identités d'utilisateur publiques et des identités d'utilisateur privées enregistrées en ce qui concerne l'abonnement de l'utilisateur à l'intérieur d'un sous-système multimédia IP, l'appareil étant **caractérisé en ce qu'**il est configuré pour effectuer la réception (9), en provenance d'un terminal d'utilisateur enregistré avec l'une donnée desdites identités d'utilisateur privées, d'une demande pour visualiser, modifier ou supprimer des informations de contact enregistrées en ce qui concerne un ou plusieurs autres terminaux d'utilisateur associés à des identités d'utilisateur privées respectives différentes, dans lequel toutes les identités d'utilisateur privées sont associées au même abonnement d'utilisateur, l'appareil étant en outre configuré pour effectuer l'évaluation et l'exécution (8, 10, 11) d'une ou plusieurs politiques d'accès aux informations de contact, l'une ou plusieurs politiques d'accès aux informations de contact définissant si et dans quelles circonstances le terminal d'utilisateur peut visualiser, modifier ou supprimer des informations de contact associées à des identités d'utilisateur privées différentes de celles utilisées par l'utilisateur pour effectuer la demande, par l'application, à la demande, de l'une ou plusieurs politiques d'accès aux informations de contact et la fourniture (9), au terminal d'utilisateur demandeur, uniquement des informations de contact autorisées par l'une ou plusieurs politiques.

13. Appareil selon la revendication 12, comprenant des moyens pour effectuer l'extraction de l'une ou plusieurs politiques à partir d'un serveur d'abonné de rattachement.

14. Appareil selon la revendication 13, dans lequel lesdits moyens d'extraction sont agencés pour effectuer l'extraction de l'une ou plusieurs politiques à l'enregistrement dudit terminal d'utilisateur ou à la réception de ladite demande.
